(19) Europäisches Patentamt
European Patent Office
Office européen des brevets

(11) EP 4 748 758 A1

(12) EUROPEAN PATENT APPLICATION

(43) Date of publication:
27.05.2026 Bulletin 2026/22

(21) Application number: 25217638.3

(22) Date of filing: 21.11.2025

(51) International Patent Classification (IPC):
B65G 43/10 (2006.01)    B65G 47/52 (2006.01)
B67C 3/00 (2006.01)      B67C 7/00 (2006.01)
B65G 47/26 (2006.01)

(52) Cooperative Patent Classification (CPC):
B65G 47/525; B65G 43/10; B65G 47/261;
B65G 47/268; B65G 47/52; B67C 3/007;
B67C 7/0046; B65G 15/20

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 22.11.2024 IT 202400026376

(71) Applicant: Gai Macchine S.p.A.
12040 Ceresole d'Alba (CN) (IT)

(72) Inventor: GAI, Carlo
12040 CERESOLE ALBA (CN) (IT)

(74) Representative: Studio Torta S.p.A.
Via Viotti, 9
10121 Torino (IT)

(54) **FEED CONVEYOR TO FEED CONTAINERS TO A BOTTLING MACHINE AND BOTTLING MACHINE INCLUDING SUCH A CONVEYOR**

(57) A feed conveyor for feeding liquid food containers to a compartment conveyor (14) of a bottling machine has a belt conveyor (22) extending along a feed path (P) and having a smooth table top to support the containers (2) and with a coefficient of friction less than 0.2 to feed a compartment conveyor (14); side guides (23) to define a single succession of containers (2) aligned along the belt conveyor (22); an actuator (24) to advance the belt conveyor (22) at a steady state so as to form an accumulation of containers (2) at the inlet of the compartment conveyor (14); and an auxiliary device (25), which is arranged along the feed path (P) and is selectively operable and configured to advance the containers (2) at the side guides (23) concordantly with the belt conveyor (22) along a section of the feed path (P).

FIG. 2

EP 4 748 758 A1

**Description**

CROSS-REFERENCE TO RELATED APPLICATIONS

This patent application claims priority from Italian patent application no. 102024000026376 filed on November 22, 2024, the entire disclosure of which is incorporated herein by reference.

SUBJECT OF THE INVENTION

This invention relates in general to a feed conveyor for feeding containers to a bottling machine, in particular, for bottling food liquids, such as still wines, sparkling wines, beer, juices, water, etc.

STATE OF THE ART

A food liquid bottling machine generally comprises a washing station, a filling station and a closing or corking station in succession. In high-capacity bottling machines, each of the above-mentioned stations comprises a carousel conveyor equipped with multiple seats uniformly distributed around the carousel's axis of rotation and configured to house respective containers at the respective rinsing, filling and container closure devices.

Each carousel conveyor is fed by a star conveyor, which has the sole task of arranging the containers in a respective seat of one of the carousel conveyors. Similarly, the containers are also unloaded from the carousel conveyor by means of a star conveyor.

The star conveyors interface directly with linear compartment conveyors in phase with the star conveyors.

The star conveyors and linear conveyors in phase with the carousel conveyors are referred to as transfer conveyors and can be driven by a single actuator also common to the carousel conveyors and mechanical drives or by several synchronised actuators because the transfer conveyors and carousel conveyors must always be in phase with each other under all operating conditions.

The bottling machine comprises a conveyor to feed the first transfer conveyor and has compartments, each of which is designed to measure a respective container and has a respective actuator implemented independently of the transfer conveyor directly downstream.

The bottling machine comprising a feed conveyor to feed glass or aluminium containers (bottles, tins, cans, etc.) to the compartment conveyor. Generally, the feed conveyor comprises a belt conveyor on which the containers are simply placed and side guides to keep the containers aligned along the feed path. Such feed conveyors make it possible to transport containers of different sizes and shapes by simply registering the distance between the side guides without having to make any other adjustments or modifications. Due to the functional requirements of the bottling machine, the belt conveyor has very low friction (coefficient of friction in the order of 0.05 - 0.15), both to limit the wear of the belt conveyor in relation to its guide supports, and to allow sliding between the belt conveyor and the containers. Sliding is a desirable effect because it allows the containers lined up in succession along the feeding device to be arranged in mutual contact and, thus, to avoid gaps in the succession of containers. The so-called accumulation of containers at the inlet of the compartment conveyor prevents the formation of gaps at the inlet of the compartment conveyor and, thus, prevents leaving some seats in the carousels empty of containers. In addition, excessive friction forces could damage the containers, deform the guide supports, or even tip the containers over.

As mentioned above, the compartment conveyor at the inlet must be fed with an accumulation of containers to avoid containers arriving spaced apart from each other. If there is no accumulation, the containers could mechanically interfere with the compartment conveyor, potentially damaging or breaking the container and leading to the blockage of the compartment conveyor. To generate the accumulation, the feed conveyor has a higher speed than the feed speed of the compartment conveyor, which brakes the containers and causes them to slide in relation to the belt conveyor.

When it is necessary to interrupt processing, the supply of bottles to the above-mentioned carousels is stopped without, however, interrupting the bottling operations of the containers downstream of the feed conveyor and compartment conveyor.

Blocking the feeding of the containers at the inlet can be done with various devices: a high-performance solution suitable for medium- and high-speed lines consists in stopping the compartment conveyor by blocking the accumulating containers on the feed conveyor. The deceleration leading to the stopping of the compartment conveyor is very abrupt because the containers contained therein must travel a short distance during deceleration to avoid encroaching on the next conveyor that is continuing to rotate and to avoid mechanical interference with the latter. High deceleration usually does not create problems for the feed conveyor because the containers are accumulating and support each other.

When processing needs to be resumed, the compartment conveyor is restarted to make it synchronous in speed with downstream conveyors and in phase with the latter. As a result, the compartment conveyor at the inlet is accelerated with accelerations in the order of 1-3 g. The containers contained in the compartment conveyor are handled correctly because the compartments are able to transmit the necessary forces to the containers and adequately support the containers for the required accelerations. The containers accumulating on the belt, on the other hand, only have the frictional force generated between the belt and container as an accelerating force:

$$F_{friction} = \mu * m * g$$

$$F = m * a$$

$$F = F_{friction} \rightarrow m * a = \mu * m * g \rightarrow a = \mu * g$$

As mentioned above, the coefficient of friction $\mu$ of the belts in the lines is very low at approximately 0.05 - 0.15. It follows that the containers accumulating on the belt accelerate with an acceleration equal to

$$A_{containers\ on\ belt} = 0.05{-}0.15 * g$$

while the containers in the compartment conveyor with accelerations in the order of:

$$A_{containers\ in\ compartment\ conveyor} = 1 - 3 * g$$

As a result, the containers accumulating on the belt cannot follow the containers in the compartments of the compartment conveyor; they become detached and gaps form in the succession of containers.

To overcome this drawback, when the containers have to be fed again, the speed of the bottling machine has to be reduced considerably in order to generate very low accelerations and allow the bottles on the belt to keep accumulating and enter the compartment conveyor correctly. Then with a calibrated acceleration ramp on the feed conveyor, the bottling machine is brought back up to the operating speed. This procedure gets around the problem but generates a significant production loss due to the fact that the machine's acceleration ramp usually has to be very gradual.

Another drawback that can occur in a bottling machine is that one or more of the rinsing, filling and container closure devices may malfunction. Downtime for repair or replacement is almost always avoided both in order not to lose production and to avoid contamination of machinery operating in the food sector. Necessary maintenance is usually carried out after the end of production. It follows that containers that are downstream of the compartment conveyor and have been "processed" by the malfunctioning or defective devices must be discarded at the outlet of the bottling machine. This generates container waste and an expenditure of resources for the disposal or reuse of incorrectly processed containers.

To avoid this, the defective devices in the carousel conveyors do not receive the containers so as to avoid their subsequent discarding.

To carry out this operation, the compartment conveyor is slowed down and stopped for a very short time and immediately afterwards re-accelerated and brought back into phase with the downstream conveyors to generate one or more empty compartments at the defective devices.

Similarly to what has been described above, significant acceleration is also generated in this situation; as a result, gaps are formed between the containers arranged successively along the feed conveyor.

Unlike the previous case, in which the problem was remedied by reducing the speed of the bottling machine, in this case the prior art does not provide concrete solutions. The higher the speed of the bottling machine, the more evident the problem.

<u>SUBJECT OF THE INVENTION</u>

The purpose of this invention is to provide a feed conveyor for feeding containers into a bottling machine that can overcome or at least mitigate the drawbacks of the prior art.

In accordance with this invention, a feed conveyor for feeding liquid food containers to a compartment conveyor of a bottling machine is provided, the feed conveyor comprising:

- a belt conveyor extending along a feed path P and having a smooth table top to support the containers and with a coefficient of friction less than 0.2 to feed a compartment conveyor;
- side guides to define a single succession of containers aligned along the belt conveyor;
- a first actuator to advance the belt conveyor at a steady state and form an accumulation of containers at the inlet of the compartment conveyor; and

- an auxiliary device, which is arranged along said feed path, is selectively operable if the compartment conveyor accelerates, and is configured to advance the containers at the side guides concordantly with the belt conveyor along a section of the feed path.

In this way, it is possible, if necessary, to operate an auxiliary propulsion source that does not have the drawbacks of the belt conveyor and is able to accelerate the containers in phase with the compartment conveyor, preventing some compartments of the compartment conveyor from remaining empty due to slippage.

Advantageously, the auxiliary device is arranged at both side guides so as to generate a force on the container on one side surface of the container in a balanced manner.

In particular, the auxiliary device comprises at least one first and one second nozzle supplied with compressed air and arranged facing each other at the side guides and configured to emit respective air jets to advance said containers by means of the thrust generated by the air jets.

In this way, the auxiliary conveyor is easily and quickly activated.

In particular, the first and second nozzles are oriented so that the air jets converge.

The convergence of the gets enables a balanced thrust in the feed direction.

In particular, the auxiliary device comprises multiple first nozzles and multiple second nozzles facing the first nozzles.

In this way, the thrust is carried out along a relatively large section of the feed conveyor.

In particular, the side guides have respective panels with corresponding slots for passing through these jets.

In this way, the containers are guided by the guides and the jets enable the auxiliary thrusts to be produced through the slots.

In accordance with one variant, the auxiliary device comprises a first and second belt conveyor facing each other and arranged on opposite sides of the belt conveyor.

According to this variant, the jets are replaced by belt conveyors, which are selectively arranged in contact with the side faces of the containers to provide the acceleration force required to achieve the accumulation opposite the compartment conveyor.

More specifically, each of the belt conveyors comprises a respective forward branch and a respective pushing member for clamping the containers between the first and second belt conveyors.

Another purpose of this invention is to provide a bottling machine that is free from the drawbacks of the prior art and, in particular, a bottling machine with a very high productivity of more than 25,000 containers per hour.

In accordance with this invention, a bottling machine is provided, particularly for bottling containers with food liquids, the bottling machine comprising:

- a plurality of carousel conveyors comprising respective devices for carrying out respective operations on each of the containers;
- a plurality of transfer conveyors;
- a compartment conveyor;
- a feed conveyor configured to feed containers directly to said compartment conveyor.

Thanks to this solution, it is possible to provide an accumulation of containers upstream of the compartment conveyor even at very high accelerations and to cyclically exclude the supply of a container if one of the devices is temporarily inactive.

In particular, the bottling machine comprises:

- a second actuator to advance the compartment conveyor;
- at least a third actuator for advancing in phase the carousel conveyors and the transfer conveyors, the first and second actuators being operable according to the third actuator and signals related to the operations of the bottling machine.

In fact, the third actuator acts as master and the first and second actuators as slaves.

The machine also comprises a fourth actuator that can be activated by signals related to the operation of the bottling machine to drive the auxiliary device.

In particular, the machine comprises a control unit; a user interface configured to exchange signals with the control unit; a plurality of sensors configured to acquire signals related to the operating state of respective devices; the control unit being configured to control the operation of the first, second, third and fourth actuators and devices according to said signals.

In this way, all the actuators and operating devices are automatically controlled according to the circumstances.

BRIEF DESCRIPTION OF THE FIGURES

Figure 1 is a schematic plan view, with parts removed for clarity, manufactured according to this invention;

- Figure 2 is a schematic plan view, with parts removed for clarity and on an enlarged scale, of a detail of the machine in Figure 1;
- Figure 3 is a perspective view, with parts removed for clarity and on an enlarged scale, of the detail in Figure 2;
- Figure 4 is a perspective view, with parts removed for clarity and on an enlarged scale, of a detail of the particular in Figure 2;
- Figure 5 is a plan view, with parts removed for clarity, of a variant of the detail in Figure 2; and
- Figure 6 is a view of a control diagram, with parts removed for clarity, of the bottling machine that is the subject of the invention.

PREFERRED EMBODIMENT

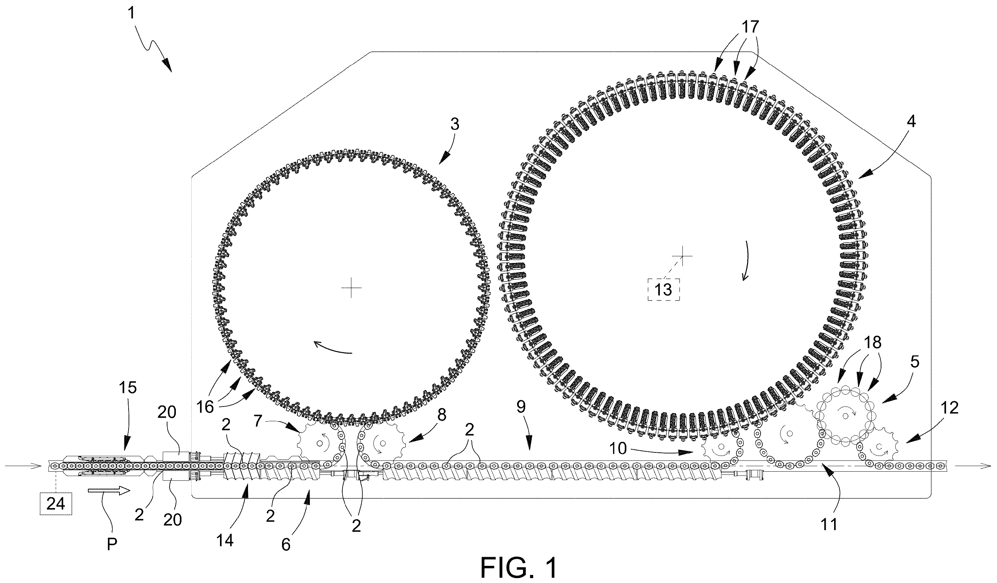

With reference to Figure 1, reference number 1 denotes, as a whole, a bottling machine for a container bottler, in this case illustrated with glass bottles, with food liquids.

The bottling machine 1 comprising three carousel conveyors 3, 4 and 5 that carry out, in order, the operations of internal rinsing of the containers 2, filling and closing the same and multiple transfer conveyors 6, 7, 8, 9, 10, 11 and 12 comprising star conveyors 7, 8, 10, 11 and 12 for loading and unloading the containers 2 from the carousel conveyors 3, 4 and 5 and linear conveyors 6 and 9. The carousel conveyors 3, 4, 5 and transfer conveyors 6 - 12 are conveyors with respective housing seats of respective containers 2, which are driven synchronously via an actuator 13 and are mechanically connected to each other so that containers 2 are transferred even when the seats of the carousel conveyors 3, 4 and 5 and transfer conveyors 6 - 12 have different distribution pitches.

The compartment conveyor 6 is synchronised with the carousel conveyors 3, 4 and 5 and transfer conveyors 7 - 12 and has variable pitch seats. In other words, the function of the compartment conveyor 6 is to arrange the containers 2 from a configuration in which they are adjacent to each other to a configuration in which the containers 2 are spaced from each other by a given amount equal to the seat distribution pitch of the transfer conveyors 7 - 12 and carousel conveyors 3, 4 and 5.

According to a variant not shown, the carousel conveyors 3, 4 and 5 and transfer conveyors 7 - 12 are driven by multiple electronically synchronised actuators.

The bottling machine 1 comprises a compartment conveyor 14 and a feed conveyor 15, the function of which is to create an accumulation of containers at the inlet of the compartment conveyor 14.

The carousel conveyors 3, 4 and 5 are respectively equipped with rinsing devices 16, filling devices 17 and a closing device 18 at each seat in order to perform the respective rinsing, filling and closing operations.

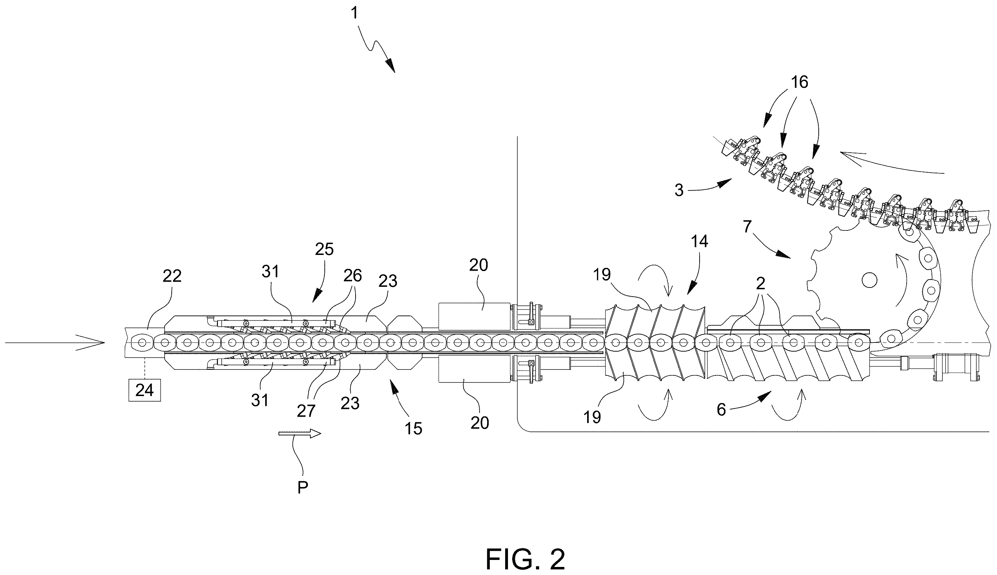

Referring to Figure 2, the compartment conveyor 14 comprises two augers 19 facing each other and driven synchronously by a respective actuator 20 so as to advance the containers 2 along a sliding plane. The augers 19 are arranged so that they define a succession of compartments, each of which is designed to house a container 2.

The feed conveyor 15 comprises a belt conveyor 22 extending along a feed path P and having a smooth table top to support the containers and with a coefficient of friction less than 0.2 to feed the compartment conveyor 14; side guides 23 to define a single succession of containers 2 aligned along the belt conveyor 22; an actuator 24 to advance the belt conveyor 22 at a steady state with a greater advancing speed than the advancing speed of the compartment conveyor 14 so as to form an accumulation of containers 2 at the inlet of the compartment conveyor 14; and an auxiliary device 25, which is arranged along the feed path P and is selectively operable and configured to advance the containers 2 together with the belt conveyor 22 along at least one section of the feed path P.

The auxiliary device 25 is arranged at both side guides 23 and comprises nozzles 26 and 27 supplied with compressed air and arranged facing each other at the side guides 23 and configured to emit respective air jets to advance the containers by the thrust generated by the air jets.

The nozzles 26 and 27 face each other and are oriented so that their respective air jets converge.

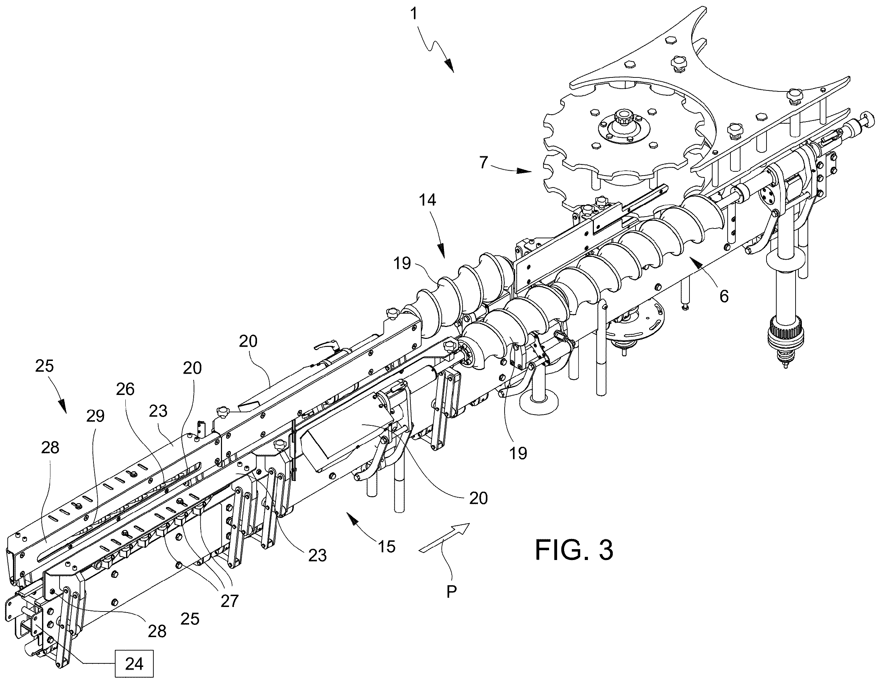

With reference to Figure 3, the side guides 23 have respective panels 28 with slots 29 for passing through these jets.

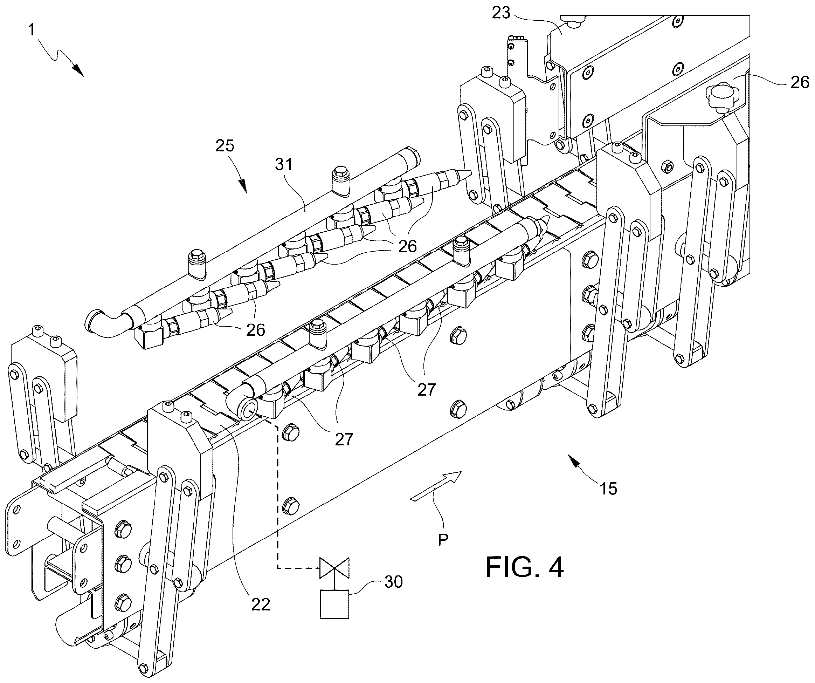

With reference to Figure 4, the auxiliary device 25 is actuated by an actuator 30, in this case a solenoid valve, to feed/stop feeding compressed air to the hoses 31 connected to the nozzles 26 and 27.

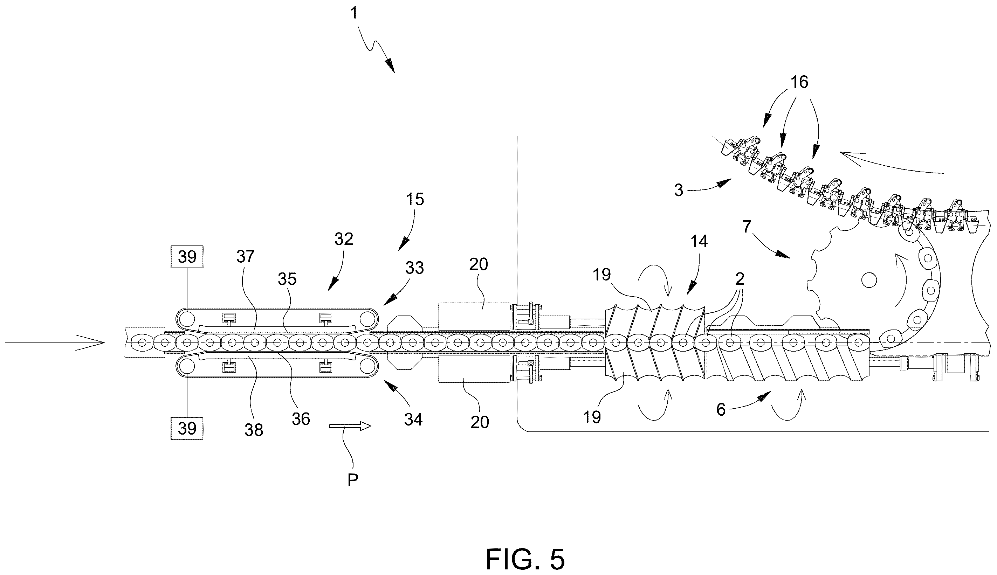

With reference to the variant in Figure 5, the feed conveyor 15 comprises an auxiliary device 32 comprising two belt conveyors 33 and 34 facing each other and arranged on opposite sides of the belt conveyor 22.

Each belt conveyor 33, 34 comprises a respective forward branch 35, 36 and a respective pushing member 37, 38 for clamping the containers 2 between the first and second belt conveyors 33, 34.

The belt conveyors 33 and 34 are equipped with synchronised actuators 39.

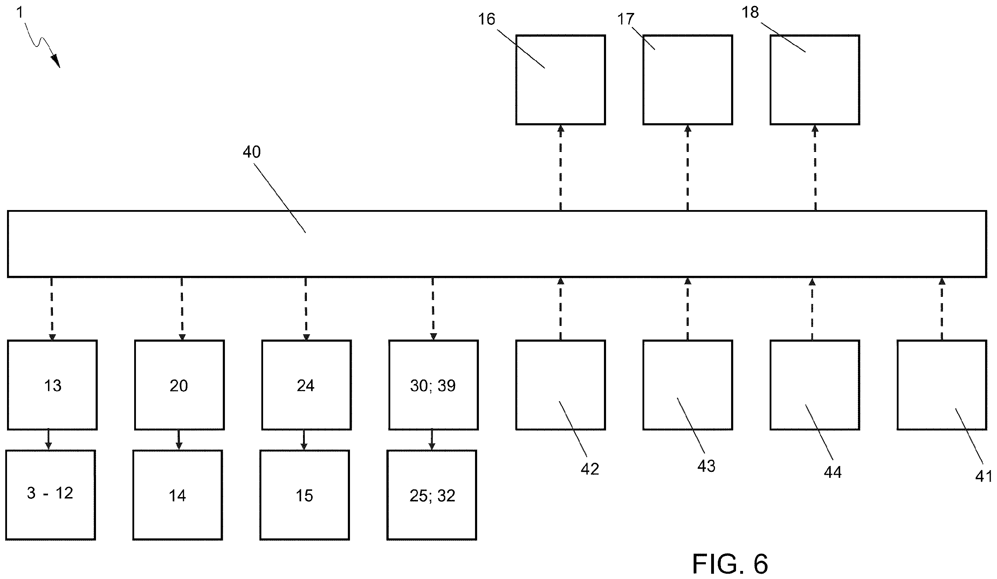

Referring to Figure 6, the machine 1 comprises a control unit 40; a user interface 41 configured to provide signals to the control unit 40; sensors 42 configured to generate signals related to the operating state of each of the rinsing devices 16; sensors 43 configured to generate signals related to the operating state of each of the filling devices 17; and sensors 44 configured to generate signals related to the operating state of each of the closing devices 18.

Based on the signals acquired, the control unit 40 controls the actuators 13, 20, 24, 30 or 39 and each of the rinsing devices 16, each of the filling devices 17 and each of the closing devices 18.

In use, the bottling machine 1 proceeds at a constant speed to perform rinsing, filling and closing via the respective carousel conveyors 3, 4 and 5. The transfer conveyors 6 - 12 operate in phase with the carousel conveyors 3, 4, and 5.

At this stage, the compartment conveyor 14 is driven in phase with the carousel conveyors 3, 4 and 5 and the transfer conveyors 6 - 12, while the belt conveyor 22 of the feed conveyor 15 has a higher speed than the speed of the compartment conveyor 14 to ensure an accumulation of containers 2 at the inlet of the compartment conveyor 14 (Figure 2).

When the bottling machine 1 is stopped by a signal transmitted to the control unit 40 via the user interface 41, the actuator 20 is stopped while the actuator 13 continues to drive the carousel conveyors 3, 4 and 5 and the transfer conveyors 6 - 12, and the actuator 24 continues to drive the belt 22. The rinsing 16, filling 17 and closing 18 devices are progressively switched off depending on the queue of containers downstream of the compartment conveyor 14. When there are no longer any containers in the machine downstream of the compartment conveyor 14, the actuator 13 is also switched off. When the bottling machine 1 is empty, the actuator 24 is also stopped and, consequently, the belt 22.

When the bottling machine 1 is restarted, all the actuators 13, 20, 24, 30 or 39 are driven with a high acceleration ramp. Although the containers arranged on the belt conveyor 22 are subject to slippage, the auxiliary device 25 or 32 advances the containers without creating gaps upstream of the compartment conveyor 14 that has been accelerated. Once the bottling machine is at a steady state, the actuator 30 or 39 is switched off because the thrust of the auxiliary conveyor 25 or 32 is no longer required when there is no acceleration.

When the eventuality arises that one or more of the rinsing 16, filling 17 and closing devices 18 malfunctions, the malfunction is detected by one or more of the sensors 42, 43 and 44 and transmitted to the control unit 39, which will cyclically exclude one or more of the containers located at those rinsing 16, filling 17 and closing devices 18 that malfunction and have been switched off. In this case, the actuator 20 is stopped temporarily so that a selected compartment in the conveyor 6 remains empty, so that it corresponds to the device with a malfunction.

In the event of a malfunction, for example of a rinsing device 16, the control unit 40 switches off the filling 17 and closing devices 18 at their respective seats, which will remain empty following the momentary interruption of the feeding.

The momentary interruption of the feeding also provides for a rapid resumption of the feeding of containers, which is realised with a very steep acceleration ramp of the compartment conveyor 14 with the activation of the actuator 20 simultaneously with the acceleration of the auxiliary device 25 or 32 which switches on the actuator 30 or 39 so as to ensure accumulation at the inlet of the compartment conveyor 14. When the acceleration ramp is completed, the auxiliary device is stopped. It should be borne in mind that the rapid stopping and subsequent restarting of the compartment conveyor 14 and the feed conveyor 15 cyclically recur until the bottling machine is stopped in a programmed manner for a sufficiently long period to service the malfunctioning devices.

In this specific case of momentary interruption of the compartment conveyor 14, the actuator 24 and the respective belt conveyor 22 are not stopped. When the compartment conveyor 14 is restarted and in the absence of the auxiliary device 25 or 32, the belt conveyor 22 would slide under the containers 2 temporarily, during which time gaps would still form between the containers.

Finally, it is clear that, this invention comprises additional variants of the embodiments described and included within the scope of protection of the attached claims.

**Claims**

1. A feed conveyor for feeding liquid food containers to a compartment conveyor of a bottling machine, the feed conveyor (15) comprising:

    - a conveyor belt (22) extending along a feed path (P) and having a table top to support the containers (2) and with a coefficient of friction less than 0.2 to feed a compartment conveyor (14);
    - side guides (23) to define a single succession of containers (2) aligned along the conveyor belt (22);
    - a first actuator (24) to advance the conveyor belt (22) at a steady state and form an accumulation of containers (2) at the inlet of the compartment conveyor (14); and

- an auxiliary device (25; 32), which is arranged along said feed path (P), is selectively operable if the compartment conveyor (14) accelerates, and is configured to advance the containers (2) at the side guides (23) concordantly with the conveyor belt (22) along a section of the feed path (P).

2. The feed conveyor as claimed in claim 1, wherein the auxiliary device (25; 32) is arranged at both side guides (23).

3. The feed conveyor as claimed in claim 1 or 2, wherein the auxiliary device (25; 32) comprises at least one first and one second nozzle (26, 27) supplied with compressed air and arranged facing each other at the side guides (23) and configured to emit respective air jets to advance said containers (2) by the thrust generated by the air jets.

4. The feed conveyor as claimed in claim 3, wherein the first and second nozzles (26, 27) are oriented such that the air jets are convergent.

5. The feed conveyor as claimed in claim 3 or 4, wherein the auxiliary device (25) comprises a plurality of first nozzles (26) and a plurality of second nozzles (27) facing the first nozzles (26).

6. The feed conveyor as claimed in any one of claims 3 to 5, wherein the side guides (23) have respective panels (28) provided with respective slots (29) for passing through said jets.

7. The feed conveyor as claimed in claim 1 or 2, wherein the auxiliary device (32) comprises a first and second belt conveyor (33, 34) facing each other and arranged on opposite sides of the conveyor belt (22).

8. The feed conveyor as claimed in claim 7, wherein each of said belt conveyors (33, 34) comprises a respective forward branch (35, 36) and a respective pushing member (37, 38) for clamping containers (2) between the first and second belt conveyors (33, 34).

9. A bottling machine, particularly for bottling containers with food liquids, the bottling machine (1) comprising:

- a plurality of carousel conveyors (3, 4, 5) comprising respective devices (16, 17, 18) for carrying out respective operations on each of the containers (2);
- a plurality of transfer conveyors (6 - 12);
- a compartment conveyor (14);
- a feed conveyor (15) in accordance with any one of the preceding claims and configured to directly feed the containers (2) to said compartment container (14).

10. The bottling machine as claimed in claim 9 and comprising:

- a second actuator (20) to advance the compartment conveyor (14);
- at least a third actuator (13) for advancing in phase the carousel conveyors (3, 4, 5) and the transfer conveyors (6 - 12), the first and second actuators (24, 20) being operable according to the third actuator and signals related to the operations of the bottling machine (1).

11. The machine as claimed in claim 10, and comprising a fourth actuator (30; 39) operable as a function of signals related to the bottling machine (1) operations.

12. The bottling machine as claimed in claim 11, and comprising a control unit (40); a user interface (41) configured to exchange signals with the control unit (40); a plurality of sensors (42, 43, 44) configured to acquire signals related to the operating state of respective devices (16, 17, 18); the control unit being configured to control the operation of the first, second, third and fourth actuators (24, 20, 13, 30; 24, 20, 13, 39) and devices (16, 17, 18) according to said signals.

FIG. 1

**FIG. 2**

FIG. 3

FIG. 4

FIG. 5

EP 4 748 758 A1

FIG. 6

Europäisches
Patentamt
European
Patent Office
Office européen
des brevets

## EUROPEAN SEARCH REPORT

**Application Number**

EP 25 21 7638

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H02 105920 U (UNKNOWN) 23 August 1990 (1990-08-23) * claim 1 * * figures 1-5 * * paragraph [0001] - paragraph [0026] * | 1,2,9-12 | INV. B65G43/10 B65G47/52 B67C3/00 B67C7/00 B65G47/26 |
| X | DE 10 2015 202658 A1 (KRONES AG [DE]) 18 August 2016 (2016-08-18) * claim 1 * * figures 1-2 * * paragraph [0001] - paragraph [0056] * | 1 | |
| X | DE 101 54 203 B4 (KREMSER ULRICH [DE]) 27 May 2004 (2004-05-27) * claim 1 * * figures 1-5 * * page 1 - page 8 * | 1-6 | |
| X | JP H10 7227 A (KOYO JIDOKI) 13 January 1998 (1998-01-13) * claim 1 * * figures 1-2 * * paragraph [0001] - paragraph [0014] * | 1 | TECHNICAL FIELDS SEARCHED (IPC) B65G B65C B67C |
| X | GB 2 239 227 A (GD SPA [IT]) 26 June 1991 (1991-06-26) * claim 1 * * figure 1 * * page 1 - page 9 * | 1,2,7 | |
| X | DE 10 2013 105460 A1 (KHS GMBH [DE]) 4 December 2014 (2014-12-04) * claim 1 * * figures 1-7 * * paragraph [0001] - paragraph [0047] * | 1,2,7,8 | |

The present search report has been drawn up for all claims

| Place of search | Date of completion of the search | Examiner |
|---|---|---|
| The Hague | 20 March 2026 | Thibaut, Charles |

## ANNEX TO THE EUROPEAN SEARCH REPORT
## ON EUROPEAN PATENT APPLICATION NO.

EP 25 21 7638

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2026

| Patent document cited in search report | | Publication date | Patent family member(s) | | Publication date |
|---|---|---|---|---|---|
| JP H02105920 | U | 23-08-1990 | NONE | | |
| DE 102015202658 | A1 | 18-08-2016 | NONE | | |
| DE 10154203 | B4 | 27-05-2004 | NONE | | |
| JP H107227 | A | 13-01-1998 | JP | 2934952 B2 | 16-08-1999 |
| | | | JP | H107227 A | 13-01-1998 |
| GB 2239227 | A | 26-06-1991 | BR | 9006367 A | 24-09-1991 |
| | | | DE | 4041245 A1 | 27-06-1991 |
| | | | FR | 2656276 A1 | 28-06-1991 |
| | | | GB | 2239227 A | 26-06-1991 |
| | | | IT | 1235967 B | 09-12-1992 |
| | | | JP | H0494320 A | 26-03-1992 |
| DE 102013105460 | A1 | 04-12-2014 | DE | 102013105460 A1 | 04-12-2014 |
| | | | EP | 3003879 A1 | 13-04-2016 |
| | | | US | 2016122133 A1 | 05-05-2016 |
| | | | WO | 2014191073 A1 | 04-12-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 102024000026376